# EUROPÄISCHE PATENTSCHRIFT

(11) **EP 0 776 773 B1**
(45) Veröffentlichungstag und Bekanntmachung des Hinweises auf die Patenterteilung: **12.04.2000**
(21) Anmeldenummer: 96119039.4
(22) Anmeldetag: 28.11.1996
(51) Int. Cl.: B60B 7/00

(54) **Schallschutzvorrichtung für ein Fahrzeugrad**
Sound-proofing device for a vehicle wheel
Dispositif d'amortissement des bruits pour roue de véhicule

(30) Priorität: 01.12.1995 DE 19544855
(43) Veröffentlichungstag der Anmeldung: 04.06.1997
(73) Patentinhaber: Continental Aktiengesellschaft, 30165 Hannover (DE)
(72) Erfinder: Folchert, Uwe, Dr., 30989 Gehrden (DE); Dodt, Thomas, Dr., 30455 Hannover (DE); Fischer, Uwe, 30823 Garbsen (DE)

(56) Entgegenhaltungen:
- EP-A- 0 730 985
- DE-A- 3 328 519
- DE-A- 3 428 468
- DE-A- 4 301 778
- DE-A- 19 529 251

## Beschreibung

Die Erfindung betrifft eine Schallschutzvorrichtung für eine Fahrzeugfelge, gemäß dem Oberbegriff des Anspruchs 1.

Derartige Schallschutzvorrichtungen sind aus der Patentliteratur bekannt.
So beschreibt z. B. die DE-PS 33 28 519 C2 einen mit dem Fahrzeugrad mitrotierenden, der Radlauffläche benachbarten Schallschutzschirm mit einer sich zum Scheibenumfang einseitig öffnenden Resonator-Hohlraumanordnung.
Da sich die Absorberöffnungen in der Nähe der Lauffläche des Reifens befinden, wird praktisch ausnahmslos nur der an der Berührungsfläche Reifen/Fahrbahn entstehende Luftschall (mehr oder weniger) absorbiert.
Die Schwingung der Felge und insbesondere die zwischen den beiden Felgen von Zwillingsrädern von Nutzfahrzeugen verstärkt auftretende Schallanregung bleibt unberücksichtigt. Auch die über die Fahrzeugachse an die Felge<n) gelangende Schwingungsanregung kann von dem Schallschutzschirm nicht absorbiert werden, da die der Fahrzeugfelge zugewandte Fläche des Schallschutzschirms für eine Schallabsorption nicht eingerichtet ist.

Der in der DE-PS 34 28 468 C2 beschriebene Schallschutzschirm, der eine Weiterbildung des in der DE-PS 33 28 519 C2 genannten Schallschutzschirms darstellt, ist ebenfalls der Radlauffläche, d. h. dem Reifen und nicht der Felge benachbart. Die Absorbermittel befinden sich am äußeren Scheibenrand, in Scheibenumfangsrichtung.
Bei dem Absorbermittel handelt es sich um eine Vielzahl von zum Schirmrand hin offenen Resonatorhohlräumen, die sich am äußeren Scheibenrand befinden. Ziel dieser neben dem Reifen angeordneten Absorberhohlräume ist es, den beim Abrollen zwischen Reifenprofil und Fahrbahn entstehenden Schall direkt neben dem Reifen wegzufangen. Dabei kommt es akustisch nur auf die Hohlräume in einer relativ schmalen äußeren Ringzone an.
Der der Felge zugewandte Teil des Schirms dient lediglich der Befestigung des Absorberringes und trägt in keiner Weise zur Absorption des Felgenschalls bei, denn die Flanke des Schirms ist von in Umfangsrichtung nebeneinanderliegenden Bremsenbelüftungs- bzw. Montageöffnungen durchsetzt.

Die Aufgabe der vorliegenden Erfindung, die mit den Xerkmalen des Anspruchs 1 gelöst ist, besteht darin, die Schwingungen der Felge und insbesondere die zwischen den beiden Felgen von Zwillingsrädern von Nutzfahrzeugen und durch die Felgenlöcher hindurchtretende Schallanregung zu absorbieren. Darüberhinaus soll die über die Fahrzeugachse an die Felge(n) gelangende Schwingungsanregung minimiert werden.

Die Schallschutzvorrichtung besteht aus einer Felgenabdeckung, die an ihrer Innenseite mindestens einen zur Fahrzeugachse konzentrischen Absorber aufweist. Die Schallschutzvorrichtung ist an der Außenseite einer Jeden Fahrzeugfelge anbringbar.
In praktischen Fahrversuchen hat sich gezeigt, daß ein Großteil des von einem Fahrzeugrad abgestrahlten Schalls nicht so sehr direkt als Luftschall von der Berührungsfläche Reifen/Fahrbahn abgestrahlt wird, sondern vielmehr durch die Fahrzeugfelge abgestrahlt wird.
Zusätzlich wird auch von dem Reifen Körperschall auf die Felge übertragen und von dort abgestrahlt. Dabei wirkt insbesondere der Zwischenraum zwischen den beiden Felgen eines Zwillingsrades als Resonanz"kasten", von wo aus dann in erhöhtem Maße über die Felge und deren Felgenöffnungen eine Luftschallabstrahlung erfolgt. Dieser von der Felge ausgehende Luftschall wird von der erfindungsgemäßen Anordnung weitgehend abgefangen und absorbiert.
Aufgrund der erfindungsspezifischen Bauform, der Anordnung und der Dimensionierung des hinter der Felgenabdeckung befindlichen Absorbers ergibt sich eine überraschend wirksame Reduktion der von der Felge seitlich abgestrahlten Schallanregung.

Nach einer bevorzugten Ausführungsform ist die erfindungsgemäße Schallschutzvorrichtung zusätzlich mit mindestens einem zweiten konzentrischen Absorber ausgestattet, wobei mindestens einer der Absorber in seinem Frequenzverhalten so ausgelegt ist, daß durch ihn vornehmlich der durch die Reifen/Fahrbahn-Geräusche angeregte, im tieferen Frequenzbereich liegende Schall absorbiert wird, und von denen mindestens ein weiterer in seinem Frequenzverhalten so ausgelegt ist, daß durch ihn vornehmlich der durch die Achse, insbesondere Antriebsachse des Fahrzeugs, angeregte, im höheren Frequenzbereich liegende Schall absorbiert wird.

Die Felge erfährt eine Schallanregung insbesondere auf zweierlei Art; einesteils wirkt der Zwischenraum zwischen den beiden Felgen von Zwillingsreifen als Resonanz"kasten", wobei die sich in dem Hohlraum ausbildende Schallschwingungen über die Felgenöffnungen zur Außenseite austreten können, andererseits wird die Felge auch über die Fahrzeugachse, insbesondere über die Antriebsachse angeregt. Die gravierendsten Frequenzbereiche liegen zwischen 250 und 600 Hz und zwischen 1 und 3 kHz.
Die Absorber sind in ihrem Absorptionsverhalten so ausgebildet, daß der von dem einen der Absorber im tiefen Frequenzbereich absorbierte Schall vorzugsweise im Frequenzbereich zwischen 250 - 600 Hz, und daß der von dem zweiten Absorber im höheren Frequenzbereich absorbierte Schall im Frequnzbereich 1 - 3 kHz liegt.
Wegen einer optimalen Anpassung der Absorber der Schallschutzvorrichtung an die verschiedenen Frequenzbereiche wird mit der erfindungsgemäßen Anordnung eine Luftschallreduktion von ca 10 dB an der Felge erreicht.

Der (bzw. die) Absorber kann als Membran- bzw. Folienabsorber, Helmholtzresonator, poröser Absorber oder als Kombination von verschiedenen solchen Absorbertypen ausgebildet sein, Der Folienabsorber besteht aus einem kreisförmigen oder ringförmigen, zur Fahrzeugachse koaxialen Hohlraum mit hartschaliger Wandung, wobei die der Felge zugewandte Seite offen und lediglich mit einer biegeweichen, evtl. perforierten Folie abgedeckt ist, Der Membranabsorber ist in gleicher Weise aufgebaut. Er unterscheidet sich vom Folienabsorber dadurch, daß die öffnung statt mit einer Folie abgedeckt zu sein mit einer Membran bespannt ist. Darüber hinaus können die Innenflächen der Absorberhohlräume mit schallweichem elastischem Material bedeckt sein, wodurch vermieden wird, daß sich innerhalb des Absorberhohlraums stehende Wellen ausbilden.

Vorzugsweise ist die Absorptionsvorrichtung so gestaltet, daß zwischen Felge und Schallschutzvorrichtung ein für ein Seitenvorgelege erforderlicher Bauraum berücksichtigt ist. Auf diese Weise ist die Schallschutzvorrichtung universell einsetzbar und nicht an einen speziellen Fahrzeugtyp gebunden.

Ein weiterer Vorteil besteht darin, daß im Bereich des Umfangs der Felgenabdeckung Belüftungsöffnungen für eine Belüftung bzw. Kühlung von Rad, Bremsen und Seitenvorgelege vorgesehen sind. Darüber hinaus kann die Felgenabdeckung mit einer zentralen öffnung in Verbindung mit an ihrer Innenseite angeordnenten radialen Führungskanälen versehen sein, wodurch je nach Rotationsgeschwindigkeit des Rades die Felgenabdeckung hinterlüftet wird. Auf diese Weise wird der bei einer schall- und luftdicht abschließenden Radabdeckung zu befürchtender Wärmestau vermieden.

Die erfindungsgemäße Schallschutzvorrichtung kann entweder mittels eines am Seitenvorgelege anschraubbaren U-förmigen Bügels oder mittels eines unter den Felgenrand einklemmbaren Klemmrings befestigt werden. Derartige Bügel oder Klemmringe sind - unabhängig vom jeweiligen Fahrzeugtyp - an jeder Fahrzeugfelge nachträglich anbringbar.

Ein Ausführungsbeispiel der Erfindung wird nachfolgend anhand der beigefügten Zeichnungen näher beschrieben.

Fig. 1 zeigt eine Schallschutzvorrichtung im Querschnitt in Zuordnung zur Fahrzeugfelge.
Fig. 2 zeigt eine Draufsicht von hinten auf eine erfindungsgemäße Schallschutzvorrichtung.
Fig. 3 zeigt dieselbe Schallschutzvorrichtung im Querschnitt (III - III').
Fig. 4 zeigt ein Befestigungsmittel für die Schallschutzvorrichtung.

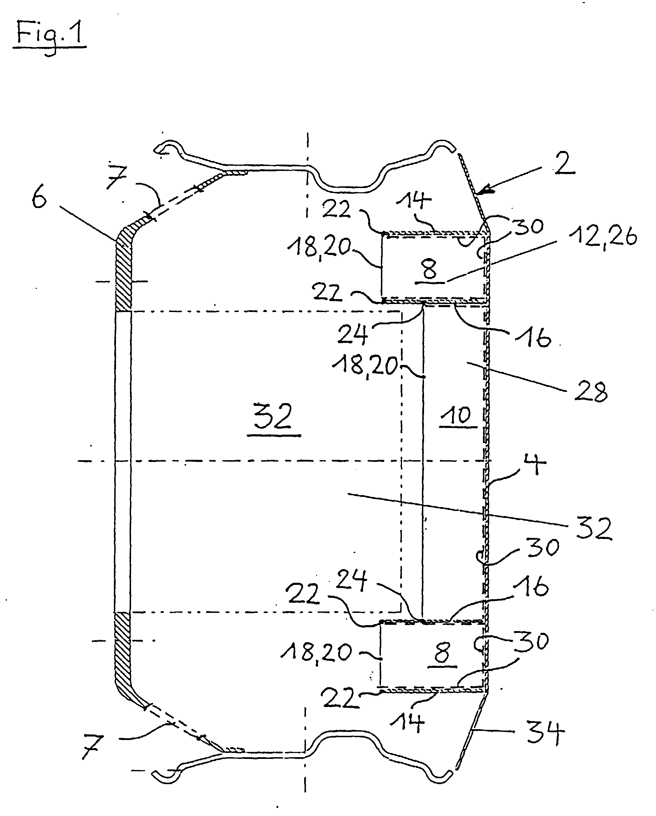

Die zur Schallabsoption an der Außenseite einer Fahrzeugfelge 6 anbringbare Schallschutzvorrichtung 2 besteht aus einer kreisrunden scheibenförmigen Felgenabdeckung 4, die annähernd den Durchmesser der Fahrzeugfelge 6 aufweist, (Fig.1). Am Inneren der Felge 6 befinden sich Felgenöffnungen 7. An der Innenseite der Felgenabdeckung 4 sind zwei zueinander konzentrische Absorber 8, 10 angeordnet. Der eine 8 der beiden Absorber 8, 10 besteht aus einem ringförmigen Hohlraum 12, der von einer äußeren zylindrischen Wandung 14, von einer inneren zylindrischen Wandung 16 und von der Felgenabdeckung 4 begrenzt ist.

Die der Felge 6 zugewandte Seite des Absorbers 8 ist offen und lediglich mit einer biegeschlaff aufgelegten Folie 20, die perforiert sein kann, bedeckt, Anstelle der biegeweichen Folie 20 kann als Abdeckung 18 eine über den öffnungsrand 22 des Absorberhohlraums 12 gespannte Membran dienen.

Im Innern des ringförmigen ersten Absorbers 8 ist der zweite Absorber 10 angeordnet. Dieser zweite Absorber 10 wird von dem inneren Zylinder 16 des ersten Absorbers 8 und auch von der Felgenabdeckung 4 begrenzt. Die der Felge 6 zugewandte öffnung 24 dieses zweiten Absorbers 10 ist, ebenso wie die öffnung 22 des ersten Absorbers 8, mit einer biegeweichen Folie 20 bedeckt oder mit einer Membran bespannt.
Dabei wirkt die aufgelegte Folie 20 bzw. die aufgespannte Membran als Masse, und das von den Absorbern 8, 10 in ihren Hohlräumen 26, 28 eingeschlossene Luftvolumen wirkt als Feder eines schwingungsfähigen Systems.
Durch eine sorgfältig abgestimmte Perforation der Abdeckfolie 20 kann die Absorptionscharakteristik der Absorber 8, 10 wesentlich breitbandiger gestaltet werden.

Zur weiteren Beeinflussung der Absorptionscharakteristik besteht die Möglichkeit, die Innenflächen der Absorber 8, 10 mit einem schalldämpfenden weichen Belag 30 auszukleiden. Hierdurch wird vermieden, daß sich im Innenraum der Absorber 8, 10 stehende Wellen störend ausbilden können.
Darüber hinaus besteht auch die Möglichkeit, den gesamten Absorberhohlraum 26, 28 mit porösem Material auszufüllen. Auch hierdurch ergibt sich eine Verbreiterung der Absorptionscharakteristik.

Die erfindungsgemäße Schallschutzvorrichtung 2 wirkt folgendermaßen: Die beim Abrollvorgang zwischen Reifenprofil und Straßenbelag entstehende Schallschwingung breitet sich teils als Luftschall teils als Körperschall über die Reifenflanken auf die jeweilige Felge 6 aus. Bei Zwillingsrädern stellt der Zwischenraum zwischen den beiden Rädern eine Art "Resonanzkasten" dar, der sowohl vom Luftschall als auch vom Körperschall in beträchtlichem Ausmaß zum Schwingen angeregt wird. Die zwischen den Felgen 6 angeregte Resonanz macht sich dann nach außen über die Felgenöffnungen bemerkbar.
Der so über die Felgenöffnungen und über die akustisch schwingende Felge 6 sebst abgestrahlte Schall hat verschiedene Ursachen und ist verschiedenen Frequenzbereichen zuzuordnen: Der von den Reifen erzeugte Schall hat eine Frequenz von 250 - 600 Hz; über die Fahrzeugachse an die Felge 6 gelangender Körperschall liegt im Frequenzbereich von 1 - 3 kHz.

Der ringförmige Absorber 8 ist vorzugsweise so ausgebildet und so dimensioniert, daß er insbesondere zur Absorption der tieferen, von dem Abrollgeräusch der Reifen im Frequenzbereich 250 - 600 Hz erzeugten Schallanregung geeignet ist.

Der zentral angeordnete Absorber 10 ist dünner ausgebildet und dient in erster Linie zur Absorption des durch die Fahrzeugachse auf die Felge 6 übertragenen (Körper-)Schalls im Frequenzbereich von 1 - 3 kHz.
Die Baumaße des zweiten Absorbers 10 sind weiterhin so gewählt, daß ein genügend großer Bauraum für ein Seitenvorgelege 32 zur Verfügung steht.
Im Randbereich der Felgenabdeckung 4 sind Belüftungsöffnungen 34 vorgesehen,

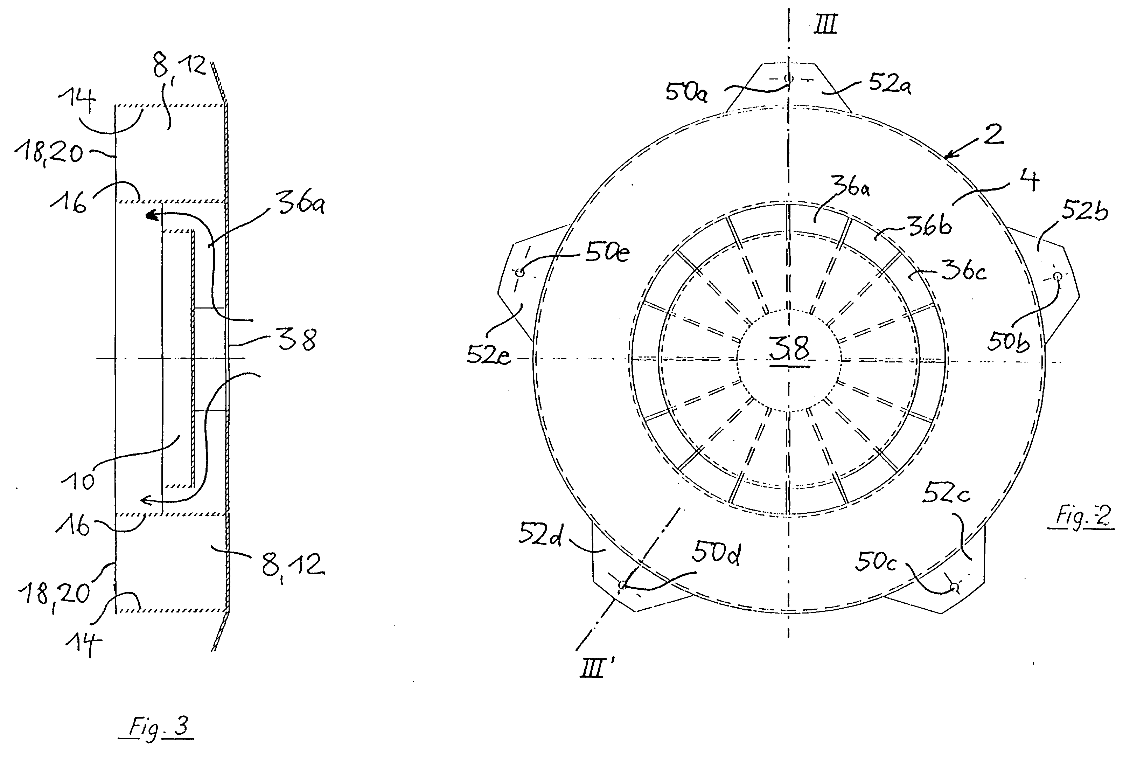

Nach einer weiteren Ausführungsform der Erfindung erfolgt eine Hinterlüftung der Felgenabdeckung 4 mittels eines Radialverdichters 36, (Fig. 2 und Fig. 3). Zu diesem Zweck befindet sich hinter der Felgenabdeckung 4 ein System radialer Kanäle 36a,b,c,... , die über eine zentrale Öffnung 38 in der Felgenabdeckung 4 mit der Außenluft in Verbindung stehen.

Bei schneller Fahrt wird die in den radialen Kanälen 36a,b,c,... befindliche Luft aufgrund der Fliehkraft radial nach außen geschleudert. Sie gelangt nun in axialer Richtung (s. Pfeile) um den Absorber 10 in die Felge 6 und von dort durch die inneren Felgenöffnungen 7 (s. Fig. 1 ) ins Freie, Auf diese Weise wird ein bei einer eingekapselten Bremse zu befürchtender Wärmestau zuverlässig vermieden.

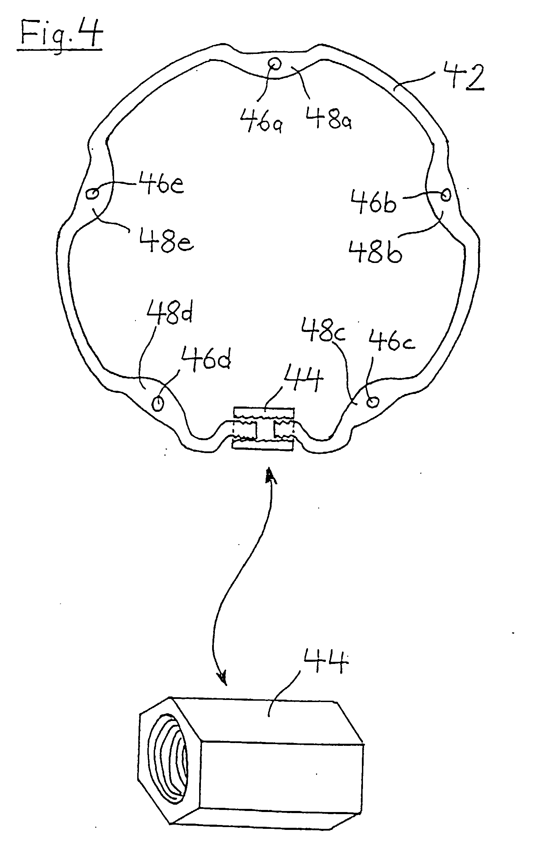

Die Befestigung der erfindungsgemäßen Felgenabdeckung 4 an der Fahrzeugfelge 6 erfolgt entweder mittels eines Befestigungsbügels, der an der Felge 6 befestigt wird, oder mittels eines für die Befestigung von Radkappen handelsüblichen Befestigungsringes (Klemmringes) 42 (Fig. 4), der hinter dem Felgenrand durch Auswärtsspreizen einspannbar ist (Spannmutter 44). Dieser Befestigungsring 42 verfügt über fünf zum Kreismittelpunkt gerichtete und mit Gewindebohrungen 46a,b,c,... versehene Ausbuchtungen 48a,b,c,... **,** die zu entsprechenden, mit Löchern 50a,b,c,... versehenen Nasen 52a,b,c,... (siehe Fig. 2) am äußeren Rand der Felgenabdeckung 4 korrespondieren.

Wenn die Löcher 50a,b,c,... der an der Felgenabdeckung 4 befindlichen Nasen 52a,b,c,... den Gewindebohrungen 46a,b,c,... den an dem Befestigungsring 42 befindlichen Ausbuchtungen 48a,b,c,... gegenüberstehen, kann die Felgenabdeckung 4 mittels Schrauben zuverlässig befestigt werden, wobei zur Schwingungsdämpfung die Schrauben in elastischen Gummitüllen gelagert sind.

### Schallschutzvorrichtung

### Bezugszeichenliste

- 2: Schallschutzvorrichtung
- 4: Felgenabdeckung
- 6: F(ahrzeugf)elge
- 7: Felgenöffnungen
- 8: Absorber 1
- 10: Absorber 2
- 12: ringförmiger Hohlraum
- 14: äußere,
- 16: innere zylindrische Wandung
- 18: Abdeckung
- 20: Folie (Membran)
- 22: öffnung(srand) des Absorbers 1
- ₂₄: öffnung(srand) des Absorbers 2
- 26: Hohlraum des Absorbers 1
- 28: Hohlraum des Absorbers 2
- 30: schalldämpfender Belag
- 32: (Bauraum für ein) Seitenvorgelege
- 34: Belüftungsöffnungen
- 36a,b,c,..: Führungskanäle
- 38: öffnung
- 42: Befestigungsring, Klemmring
- 44: Spannmutter
- 46a,b,c,...: Gewindebohrungen
- 48a,b,c,...: Ausbuchtungen
- 50a,b,c,...: Löcher, Schraublöcher
- 52a,b,c,...: Nase

## Patentansprüche

1. Schallschutzvorrichtung (2) für ein Fahrzeugrad, mit einer Fahrzeugfelge (6),
die eine Felgenabdeckung (4) aufweist, wobei
- die Felgenabdeckung (4) an ihrer Innenseite, d. h. gegenüber der Fahrzeugfelge <6),
mindestens einen zur Fahrzeugachse konzentrischen Absorber (8) zur Absorption von Schall, der von der Felge (6) abgestrahlt wird und/oder durch die Felgenöffnungen (7) hindurchtritt hat, **gekennzeichnet durch** folgende Merkmale :
- die Felgenabdeckung (4) ist mit mindestens einem weiteren konzentrischen Absorber <10) ausgestattet,
wobei mindestens einer <8) der Absorber <8, 10) in seinem Frequenzverhalten in an sich bekannter Weise so ausgelegt ist,
daß durch ihn vornehmlich der durch die Reifen/Fahrbahn-Geräusche angeregte, im tieferen Frequenzbereich liegende Schall absorbiert wird,
und von denen mindestens ein zweiter Absorber <10) in seinem Frequenzverhalten in an sich bekannter Weise so ausgelegt ist,
daß durch ihn vornehmlich der durch die Achse angeregte, im höheren Frequenzbereich liegende Schall absorbiert wird;
- die Absorber <8, 10) bestehen aus einem ringförmigen und/oder zylindrischen, zur Fahrzeugachse koaxialen Hohlraum <12) mit hartschaliger Wandung <14, 16); wobei die der Felge <6) zugewandte Seite offen und lediglich mit einer biegeweichen Folie (20) abgedeckt ist,
- der von dem einen <8) der Absorber <8, 10) im tieferen Frequenzbereich absorbierte Schall liegt im Frequenzbereich 250 - 600 Hz;
- der von dem zweiten Absorber (10) im höheren Frequenzbereich absorbierte Schall liegt im Frequenzbereich 1 - 3 kHz.

2. Schallschutzvorrichtung nach Anspruch 1,
**dadurch gekennzeichnet,**
daß zwischen Felge <6) und Schallschutzvorrichtung <2) ein für ein Seitenvorgelege erforderlicher Bauraum (32) berücksichtigt ist.

3. Schallschutzvorrichtung nach Anspruch 1 oder 2,
**dadurch gekennzeichnet,**
daß der verwendete Absorber <8, 10) in an sich bekannter Weise als Membran- oder Folienabsorber, als Helmholtzresonator, als poröser Absorber oder als Kombination von verschiedenen Absorbertypen ausgebildet ist.

4. Schallschutzvorrichtung nach einem der vorhergehenden Ansprüche 1 - 3,
**dadurch gekennzeichnet,**
daß die Innenflächen der Absorberhohlräume <26, 28) mit schallweichem elastischen Material <30) bedeckt sind.

5. Schallschutzvorrichtung nach einem der Ansprüche 1 - 4,
**dadurch gekennzeichnet,**
daß im Bereich des Umfangs der Felgenabdeckung <4) Belüftungsöffnungen (34) vorgesehen sind.

6. Schallschutzvorrichtung nach einem der Ansprüche 1 - 5,
**dadurch gekennzeichnet,**
daß die Felgenabdeckung (4) mit einer zentralen öffnung (38) in Verbindung mit an ihrer Innenseite angeordneten radialen Führungskanälen (36) versehen ist.

7. Schallschutzvorrichtung nach einem der Ansprüche 1 - 6,
**gekennzeichnet durch:**
ein Befestigungsmittel in Gestalt eines U-förmigen Befestigungsbügels, dessen Enden an oder neben dem Seitenvorgelege der Fahrzeugfelge <6) und an dessen Mittelteil die Schallschutzvorrichtung (2) anbringbar ist.

8. Schallschutzvorrichtung nach einem der Ansprüche 1 - 6,
**gekennzeichnet durch:**
einen hinter dem Rand der Felge <6) einspannbaren Klemmring <42),
der mit Gewindebohrungen (46a,b,c,...) versehene Ausbuchtungen (48a,b,c,...) aufweist, die in Verbindung mit mit Schraublöchern (50a,b,c,...) versehenen und am äußeren Rand der Felgenabdeckung <4) befindlichen Nasen (52a,b,c,...) zur Schraubbefestigung der Schallschutzvorrichtung (2) dienen.

9. Verwendung einer Schallschutzvorrichtung (2) nach einem der Ansprüche 1 bis 8, die an ihrer Innenseite mindestens einen zur Fahrzeugachse konzentrischen Absorber <8) aufweist,
zur Absorption von an Zwillingsrädern von Nutzfahrzeugen auftretender Schallabstrahlung.

## Claims

1. Soundproofing device (2) for a vehicle wheel, having a vehicle rim (6), which has a rim covering (4), wherein
- the rim covering (4) has, on its internal surface, i.e. opposite the vehicle rim (6), at least one absorber (8), which is concentric with the vehicle axle, for absorbing sound radiated by the rim (6) and/or passing through the rim openings (7),
characterised by the following features:
- the rim covering (4) is provided with at least one additional concentric absorber (10),
at least one (8) of the absorbers (8, 10) having such a frequency behaviour, in a manner known per se, that the sound, energised by the tyre/roadway noises and lying in the lower frequency range, is mainly absorbed by said absorber, and at least one second absorber (10) of said absorbers having such a frequency behaviour, in a manner known per se, that the sound, energised by the axle and lying in the higher frequency range, is mainly absorbed by said absorber;
- the absorbers (8, 10) comprise an annular and/or cylindrical cavity (12), which is coaxial with the vehicle axle and has a hard wall (14, 16); the side facing the rim (6) being open and only being covered with a flexible film (20),
- the sound, absorbed by one (8) of the absorbers (8, 10) in the lower frequency range, lies in the frequency range 250 - 600 Hz;
- the sound, absorbed by the second absorber (10) in the higher frequency range, lies in the frequency range 1 - 3 kHz.

2. Soundproofing device according to claim 1, characterised in that a structural area (32), which is required for a lateral countershaft, is provided between rim (6) and soundproofing device (2).

3. Soundproofing device according to claim 1 or 2, characterised in that the absorber (8, 10) used is configured in a manner known per se as a diaphram or film absorber, as a Helmholtz resonator, as a porous absorber or as a combination of various absorber types.

4. Soundproofing device according to one of the preceding claims 1 - 3, characterised in that the internal surfaces of the absorber cavities (26, 28) are covered with sound-absorbent resilient material (30).

5. Soundproofing device according to one of claims 1 - 4, characterised in that air inlet apertures (34) are provided in the region of the periphery of the rim covering (4).

6. Soundproofing device according to one of claims 1 - 5, characterised in that the rim covering (4) is provided with a central opening (38) in association with radial guide channels (36) disposed on its internal surface.

7. Soundproofing device according to one of claims 1 - 6, characterised by:
a securing means in the form of a U-shaped securing clamp, the ends of which are mountable on or adjacent to the lateral countershaft of the vehicle rim (6), and the soundproofing device (2) is mountable on the central part of said clamp.

8. Soundproofing device according to one of claims 1 - 6, characterised by:
a clamping ring (42), which can be clamped in position behind the edge of the rim (6) and has bulges (48a, b, c, ...) provided with threaded bores (46a, b, c, ...), said bulges being used for the screw-fastening of the soundproofing device (2) in conjunction with projections (52a, b, c, ...), which are provided with screw holes (50a, b, c,...) and are situated on the external edge of the rim covering (4).

9. Use of a soundproofing device (2) according to one of claims 1 to 8, which has, on its internal surface, at least one absorber (8), which is concentric with the vehicle axle, for the absorption of sound radiation produced by twin wheels of commercial vehicles.

## Revendications

1. Dispositif d'insonorisation (2) pour une roue de véhicule, comprenant une jante de véhicule (6), qui comporte un élément de recouvrement de jante (4), l'élément de recouvrement de jante (4) possédant sur son côté intérieur, c'est à dire en regard de la jante de véhicule (6), au moins un absorbeur (8) concentrique à l'essieu de véhicule, destiné à absorber le bruit qui est rayonné par la jante (6) et/ou traverse les ouvertures de jante (7), **caractérisé** par les particularités suivantes:
- l'élément de recouvrement de jante (4) est équipé d'au moins un autre absorbeur (10) concentrique, au moins l'un (8) des absorbeurs (8, 10) étant conçu quant à son comportement en fréquence, de manière connue en soi, de façon telle qu'il absorbe en priorité le son situé dans le domaine des fréquences plutôt basses et engendré par les bruits d'interaction pneumatique/chaussée, et au moins un second absorbeur (10) étant conçu quant à son comportement en fréquence, de manière connue en soi, de façon à ce qu'il absorbe en priorité le son situé dans le domaine des fréquences plus élevées et engendré par l'essieu,
- les absorbeurs (8, 10) sont constitués par une chambre creuse (12) de forme annulaire et/ou cylindrique, coaxiale à l'essieu de véhicule, et possédant une paroi (14, 16) en forme de coque dure, le côté dirigé vers la jante (6) étant ouvert et uniquement recouvert d'une feuille (20) souple en flexion,
- le son absorbé par l'un (8) des absorbeurs (8, 10) dans le domaine des fréquences plutôt basses, se situe dans le domaine de fréquence de 250 - 600 Hz,
- le son absorbé par le deuxième absorbeur (10) dans le domaine des fréquences plus élevées, se situe dans le domaine de fréquence de 1 - 3 kHz.

2. Dispositif d'insonorisation selon la revendication 1, **caractérisé** en ce qu'entre la jante (6) et le dispositif d'insonorisation (2), est réservé un espace de construction (32) nécessaire à une transmission intermédiaire latérale.

3. Dispositif d'insonorisation selon la revendication 1 ou 2, **caractérisé** en ce que l'absorbeur (8, 10) utilisé est réalisé de manière connue en soi, en tant qu'absorbeur à membrane ou à feuille, en tant que résonateur de Helmholtz, en tant qu'absorbeur poreux ou en tant que combinaison de différents types d'absorbeur.

4. Dispositif d'insonorisation selon l'une des revendications précédentes 1 - 3, **caractérisé** en ce que les surfaces intérieures des cavités d'absorbeur (26, 28) sont recouvertes d'un matériau élastique (30) souple sur le plan acoustique.

5. Dispositif d'insonorisation selon l'une des revendications précédentes 1 - 4, **caractérisé** en ce que dans la zone de la périphérie de l'élément de recouvrement de jante (4), sont prévues des ouvertures de ventilation (34).

6. Dispositif d'insonorisation selon l'une des revendications précédentes 1 - 5, **caractérisé** en ce que l'élément de recouvrement de jante (4) est pourvu d'une ouverture centrale (38) en combinaison avec des canaux de guidage (36) d'orientation radiale et disposés sur le côté intérieur de l'élément de recouvrement de jante.

7. Dispositif d'insonorisation selon l'une des revendications précédentes 1 - 6, **caractérisé** par un moyen de fixation sous la forme d'un étrier de fixation en forme de U, dont les extrémités peuvent être placées au niveau ou à côté de la transmission intermédiaire latérale de la jante de véhicule (6), et sur la partie centrale duquel peut être placé le dispositif d'insonorisation (2).

8. Dispositif d'insonorisation selon l'une des revendications précédentes 1 - 6, **caractérisé** par un anneau de serrage (42) pouvant être serré derrière le bord de la jante (6) et qui présente des bossages (48a,b,c,...) dotés de trous taraudés (46a,b,c,...), qui, en combinaison avec des talons (52a,b,c,...) dotés de trous de vis (50a,b,c,...) et se trouvant sur le bord extérieur de l'élément de recouvrement de jante (4), servent à la fixation par vissage du dispositif d'insonorisation (2).

9. Utilisation d'un dispositif d'insonorisation (2) selon lune des revendications 1 à 8, qui comporte sur son côté intérieur, au moins un absorbeur (8) concentrique à l'essieu du véhicule, pour absorber le rayonnement sonore apparaissant au niveau de roues jumelées de véhicules utilitaires.
